# EUROPÄISCHE PATENTANMELDUNG

(11) **EP 1 902 888 A2**
(43) Veröffentlichungstag der Anmeldung: **26.03.2008**
(21) Anmeldenummer: 07016543.6
(22) Anmeldetag: 23.08.2007
(51) Int. Cl.: B60K 6/48

(54) **Antriebsstrang für ein Kraftfahrzeug**

(30) Priorität: 21.09.2006 DE 102006044534
(71) Anmelder: LuK Lamellen und Kupplungsbau Beteiligungs KG, 77815 Bühl (DE)
(72) Erfinder: Maienschein, Stephan, 76534 Baden-Baden (DE); Jung, Stefan, 77694 Kehl (DE); Gicquel, David, 67850 Offendorf (FR)

(57) **Zusammenfassung**

Ein Antriebsstrang (1) für ein Kraftfahrzeug weist als Antrieb eine Hubkolbenverbrennungsmaschine (2) und mindestens eine elektrische Maschine (3) auf. Die Hubkolbenverbrennungsmaschine (2) ist über eine erste Kupplung (5) und die elektrische Maschine (3) über eine zweite Kupplung (8) mit einer Eingangswelle (6) eines Getriebes (7) in Antriebsverbindung bringbar. Zwischen der ersten Kupplung (5) und der Eingangswelle (6) des Getriebes (7) ist ein Drehschwingungsdämpfer (9) angeordnet.

## Beschreibung

Die Erfindung betrifft einen Antriebsstrang für ein Kraftfahrzeug, der als Antrieb eine Hubkolbenverbrennungsmaschine und mindestens eine elektrische Maschine aufweist, wobei die Hubkolbenverbrennungsmaschine über eine erste Kupplung und die elektrische Maschine über eine zweite Kupplung mit einer Eingangswelle eines Getriebes in Antriebsverbindung bringbar sind.

Ein derartiger Hybrid-Antriebsstrang, der als Antrieb eine Hubkolbenverbrennungsmaschine und eine erste elektrische Maschine aufweist, ist aus der Praxis bekannt. Zusätzlich zu der ersten elektrischen Maschine hat der Antriebsstrang eine zweite elektrische Maschine, die als Anlasser für die Hubkolbenverbrennungsmaschine und als Generator zur Stromversorgung des Kraftfahrzeugs dient. Die Hubkolbenverbrennungsmaschine steht über einen Drehschwingungsdämpfer mit der zweiten elektrischen Maschine und dem Primärteil einer ersten Kupplung in Antriebsverbindung. Ein Sekundärteil der ersten Kupplung treibt eine Eingangswelle eines Getriebes an, das mit seiner Ausgangswelle mit Antriebsrädern des Kraftfahrzeugs in Antriebsverbindung steht. Die erste elektrische Maschine ist über eine zweite Kupplung mit der Eingangswelle des Getriebes in Antriebsverbindung bringbar. Mit Hilfe des Antriebsstrangs ist es möglich, das Kraftfahrzeug wahl- oder wechselweise in unterschiedlichen Betriebsarten, nämlich entweder nur mit der Hubkolbenverbrennungsmaschine oder nur mit der ersten elektrischen Maschine oder mit der Hubkolbenverbrennungsmaschine und der elektrischen Maschine gleichzeitig anzutreiben. Wenn das Kraftfahrzeug nur mit der ersten elektrischen Maschine angetrieben wird, ist die erste Kupplung geöffnet, so dass die Hubkolbenverbrennungsmaschine und die zweite elektrische Maschine dann von der GetriebeEingangswelle abgekoppelt sind. Die Hubkolbenverbrennungsmaschine kann dann abgeschaltet sein. Wenn das Kraftfahrzeug nur mit der Hubkolbenverbrennungsmaschine angetrieben wird, kann die zweite Kupplung geöffnet sein, so dass dann die erste elektrische Maschine von der Getriebeeingangswelle getrennt ist.

Der Antriebsstrang hat den Nachteil, dass er insbesondere in den Betriebsarten, in denen das Kraftfahrzeug allein mit der Hubkolbenverbrennungsmaschine oder mit der Hubkolbenverbrennungsmaschine und der ersten elektrischen Maschine gemeinsam angetrieben wird, trotz des zwischen der Hubkolbenverbrennungsmaschine und der ersten Kupplung vorgesehenen Drehschwingungsdämpfers noch relativ viel Geräusche und Vibrationen in die Karosserie des Kraftfahrzeugs einkoppelt.

Es besteht deshalb die Aufgabe, einen Hybrid-Antriebsstrang der eingangs genannten Art zu schaffen, der in den unterschiedlichen Betriebsarten jeweils einen vibrations- und geräuscharmen Antrieb des Kraftfahrzeugs ermöglicht.

Diese Aufgabe wird dadurch gelöst, dass zwischen der ersten Kupplung und der Eingangswelle des Getriebes ein Drehschwingungsdämpfer angeordnet ist. Überraschenderweise hat sich herausgestellt, dass durch diese Anordnung des Drehschwingungsdämpfers die Einkopplung von Vibrationen und Geräuschen in die Fahrzeugkarosserie weitgehend vermieden werden kann.

Bei einer vorteilhaften Ausgestaltung der Erfindung weist der Drehschwingungsdämpfer ein mit der ersten Kupplung verbundenes Primärteil und ein mit der Eingangswelle verbundenes Sekundärteil auf, wobei das Primärteil und das Sekundärteil aus einer Ruhelage gegen die Rückstellkraft mindestens einer Feder relativ zueinander verdrehbar sind. Der Drehschwingungsdämpfer ermöglicht dann bei einer kompakten Bauform eine hohe Dämpfung.

Bei einer zweckmäßigen Ausführungsform der Erfindung verbindet die erste Kupplung die Hubkolbenverbrennungsmaschine mit dem Primärteil und die zweite Kupplung die elektrische Maschine mit dem Sekundärteil des Drehschwingungsdämpfers. Die elektrische Maschine ist also über das Sekundärteil drehfest mit der Eingangswelle des Getriebes verbunden und somit von den Drehschwingungen der Hubkolbenverbrennungsmaschine weitgehend entkoppelt. Dabei wird der Drehschwingungsdämpfer praktisch nicht mit dem Massenträgheitsmoment der elektrischen Maschine belastet.

Bei einer anderen vorteilhaften Ausgestaltung der Erfindung verbindet die erste Kupplung die Hubkolbenverbrennungsmaschine und die zweite Kupplung die elektrische Maschine jeweils mit dem Primärteil des Drehschwingungsdämpfers. Bei dieser Ausgestaltung können auch eventuelle von der elektrischen Maschine auf die Eingangswelle übertragene Drehschwingungen mittels des Drehschwingungsdämpfers gedämpft werden.

Vorteilhaft ist, wenn die elektrische Maschine koaxial zur Eingangswelle des Getriebes angeordnet und durch einen ringförmig um die Eingangswelle umlaufenden Zwischenraum von dieser beabstandet ist, und wenn in dem Zwischenraum der Drehschwingungsdämpfer vorgesehen ist. Der Antriebsstrang ermöglicht dann einen sehr kompakten Aufbau.

Bei einer zweckmäßigen Ausführungsform der Erfindung weist die zweite Kupplung mit einem Rotor der elektrischen Maschine verbundene erste Lamellen und relativ dazu verdrehbare zweite Lamellen auf, wobei die zweiten Lamellen direkt mit dem Primärteil verbunden sind. Das Primärteil des Drehschwingungsdämpfers ermöglicht dann eine Doppelfunktion und dient gleichzeitig auch als Trägerteil für die zweiten Lamellen der zweiten Kupplung. Die Lamellen sind dabei in einem Ölbad angeordnet (Nasskupplung).

Vorteilhaft ist, wenn das Primärteil eine Außenumfangswand aufweist und wenn die zweiten Lamellen direkt mit der Außenumfangswand verbunden und vorzugsweise in normal zur Eingangswelle des Getriebes verlaufenden Ebenen angeordnet sind. Der Antriebsstrang ermöglicht dann eine axial kurze Bauform. Außerdem lässt sich die zweite Kupplung kostengünstig herstellen und leicht montieren.

Die erste Kupplung weist bevorzugt erste Lamellen und relativ dazu verdrehbare zweite Lamellen auf, wobei diese ersten und zweiten Lamellen in Axialrichtung der Eingangswelle neben dem Drehschwingungsdämpfer angeordnet sind. In entsprechender Weise können die ersten Lamellen und die zweiten Lamellen der zweiten Kupplung in Axialrichtung der Eingangswelle neben dem Drehschwingungsdämpfer angeordnet sein. Der Antriebsstrang ermöglicht dann radial zur Eingangswelle des Getriebes kompakte Abmessungen.

Vorzugsweise ist der Drehschwingungsdämpfer zwischen den Lamellen der ersten Kupplung und den Lamellen der zweiten Kupplung angeordnet ist. Dadurch ergibt sich ein kompakter und weitgehend symmetrischer Aufbau.

Bei einer bevorzugten Ausgestaltung der Erfindung weist der Antriebsstrang zusätzlich zu der ersten elektrischen Maschine eine dem Drehschwingungsdämpfer vorgeschaltete zweite elektrische Maschine auf, die mit der Hubkolbenverbrennungsmaschine in Antriebsverbindung steht. Die zweite elektrische Maschine kann dann als Anlasser für die Hubkolbenverbrennungsmaschine und/oder als Generator genutzt werden.

Zweckmäßigerweise ist die zweite elektrische Maschine in einem axial zwischen der Hubkolbenverbrennungsmaschine und dem Drehschwingungsdämpfer befindlichen Bauraum koaxial zu einer in gerader Verlängerung der Eingangswelle vorgesehenen Zwischenwelle angeordnet. Auch durch diese Maßnahme kann eine kompakte Bauform des Antriebsstrangs erreicht werden.

Vorteilhaft ist, wenn zwischen der zweiten elektrischen Maschine und der Hubkolbenverbrennungsmaschine ein zweiter Drehschwingungsdämpfer angeordnet ist, der vorzugsweise ein mit einer Kurbelwelle der Hubkolbenverbrennungsmaschine verbundenes Eingangsteil und ein mit dem Läufer der zweiten elektrischen Maschine drehfest verbundenes Ausgangsteil aufweist, wobei das Eingangsteil und das Ausgangsteil aus einer Ruhelage gegen die Rückstellkraft mindestens eines Federelements relativ zueinander verdrehbar sind. Der Antriebsstrang ermöglicht dann einen noch vibrations- und geräuscharmen Lauf.

Die Feder und/oder das Federelement sind bevorzugt als gebogene Wendelfeder ausgestaltet, die in einer Gleitrinne liegt. Durch diese Bauform können bei kompakten Abmessungen relativ große Federwege und eine hohe Dämpfung erreicht werden.

Bei einer anderen Ausgestaltung der Erfindung sind die Feder und/oder das Federelement eine Bogenfeder. Der Drehschwingungsdämpfer weist dann einen einfachen und robusten Aufbau auf und ist kostengünstig herstellbar.

Nachfolgend sind Ausführungsbeispiele der Erfindung anhand der Zeichnung näher erläutert. Es zeigt:
- Fig. 1: ein Ersatzschaltbild eines Antriebsstrangs,
- Fig. 2: einen Teillängsschnitt durch ein erstes Ausführungsbeispiel eines Antriebsstrangs, wobei eine erste elektrische Maschine und ein rotierendes Bauteil erkennbar sind, das mit einer nur schematisch dargestellten Hubkolbenverbrennungsmaschine in Antriebsverbindung steht,
- Fig. 3: ein Ersatzschaltbild eines Teils des ersten Ausführungsbeispiels des Antriebsstrangs,
- Fig. 4: einen Teillängsschnitt durch ein zweites Ausführungsbeispiel eines Antriebsstrangs,
- Fig. 5: ein Ersatzschaltbild eines Teils des zweiten Ausführungsbeispiels des Antriebsstrangs,
- Fig. 6: einen Teillängsschnitt durch den in Fig. 4 und 5 gezeigten Antriebsstrang, auf welchem Teillängsschnitt eine zweite elektrische Maschine erkennbar ist, und
- Fig. 7: einen Teillängsschnitt durch den in Fig. 5 gezeigten Antriebsstrang, wobei ein Drehschwingungsdämpfer erkennbar ist.

Ein im Ganzen mit 1 bezeichneter Antriebsstrang für ein Kraftfahrzeug weist als Antrieb eine Hubkolbenverbrennungsmaschine 2 und eine erste elektrische Maschine 3 auf. Die erste elektrische Maschine 3 ist über eine in der Zeichnung nicht näher dargestellte Ansteuereinrichtung mit einem elektrischen Energiespeicher, wie z.B. einem Akku verbunden. Der Antriebsstrang 1 hat ferner eine zweite elektrische Maschine 4, die als Anlasser zum Starten der Hubkolbenverbrennungsmaschine 2 und als Generator zur Stromversorgung des Kraftfahrzeugs nutzbar ist.

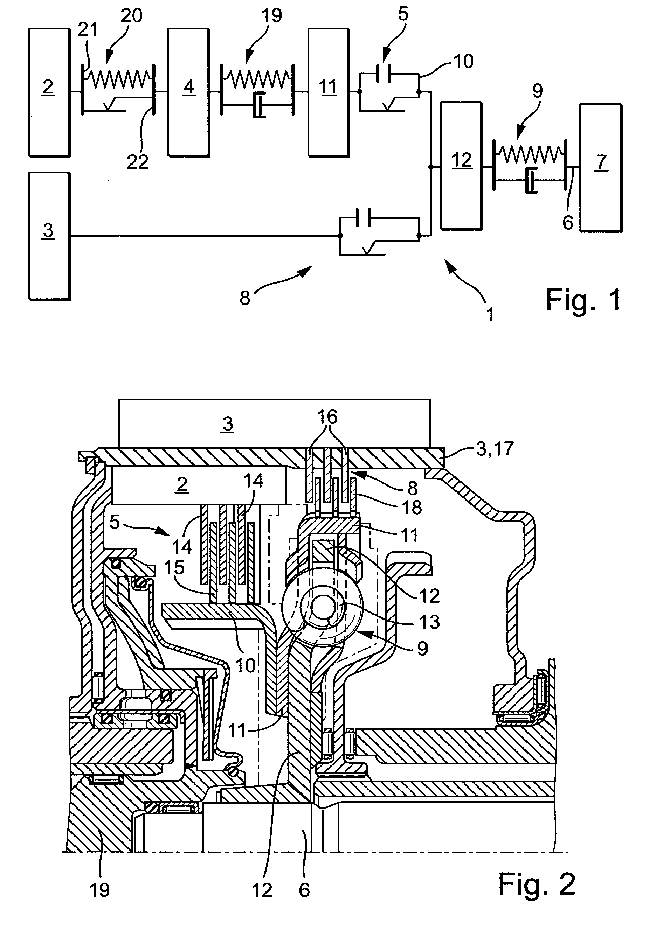

In Fig. 1 ist erkennbar, dass die Hubkolbenverbrennungsmaschine 2 und die zweite elektrische Maschine 4 über eine erste, als Anfahrkupplung dienende Kupplung 5 mit einer Eingangswelle 6 eines Getriebes 7 in Antriebsverbindung bringbar sind. Die erste Kupplung 5 ist zwischen der zweiten elektrischen Maschine 4 und der Eingangswelle 6 angeordnet. Die zweite elektrische Maschine 4 befindet sich zwischen der Hubkolbenverbrennungsmaschine 2 und der ersten Kupplung 5. Die erste elektrische Maschine 3 kann über eine zweite Kupplung 8 mit der Eingangswelle 6 in Wirkverbindung gebracht werden. Die beiden Kupplungen 5, 8 sind jeweils als Nasskupplung ausgestaltet, bei denen die beiden miteinander zu kuppelnden Teile ineinander greifende Lamellen aufweisen, die in einem Ölbad umlaufen.

Zwischen der ersten Kupplung 5 und der Eingangswelle 6 des Getriebes 7 ist ein erster Drehschwingungsdämpfer 9 angeordnet, der die von der Hubkolbenverbrennungsmaschine 2 erzeugten Drehmomentschwankungen glättet. In Fig. 2 ist erkennbar, dass der erste Drehschwingungsdämpfer 9 ein mit einem Ausgangsteil 10 der ersten Kupplung 5 verbundenes Primärteil 11 und ein mit der Eingangswelle 6 des Getriebes 7 verbundenes Sekundärteil 12 hat. Das Primärteil 11 und das Sekundärteil 12 sind aus einer Ruhelage gegen die Rückstellkraft mindestens einer Feder 13 relativ zueinander verdrehbar. Die Feder 13 ist eine gebogene Wendelfeder, die mit ihrer Längserstreckung etwa in Umfangsrichtung des Primärteils 11 und des Sekundärteils 12 verläuft und in einer zwischen dem Primärteil 11 und dem Sekundärteil 12 gebildeten Gleitrinne liegt. Das eine Ende der Feder 13 ist gegen das Primärteil 11 und das andere Ende gegen das Sekundärteil 12 abgestützt.

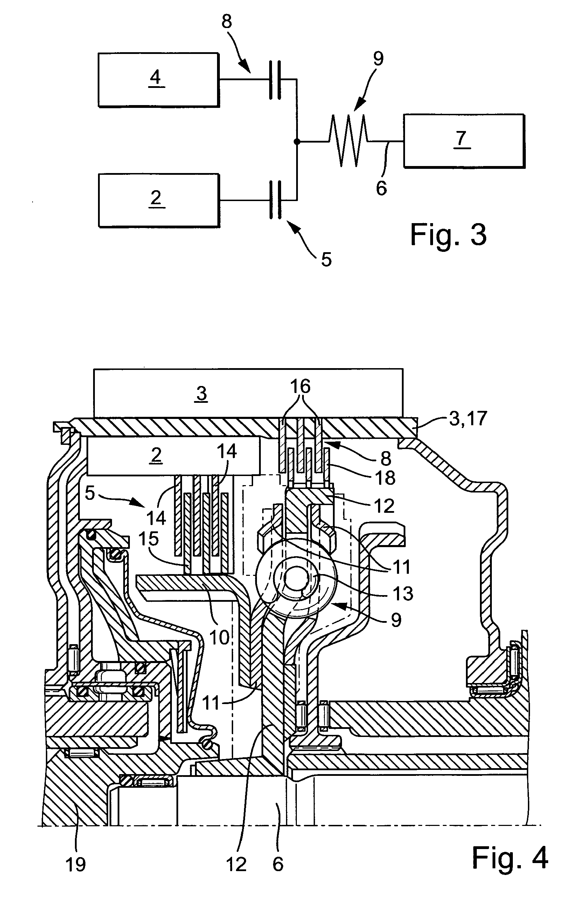

Bei dem in Fig. 2 und 3 gezeigten Ausführungsbeispiel verbindet die erste Kupplung 5 die Hubkolbenverbrennungsmaschine 2 mit dem Primärteil 11 des ersten Drehschwingungsdämpfers 9 und die zweite Kupplung 8 die erste elektrische Maschine 3 mit dem Primärteil 11.

In Fig. 2 ist erkennbar, dass das Ausgangsteil 10 ringförmig mit einem in einer etwa radial zur Eingangswelle 6 verlaufenden Ebene angeordneten Flanschteil und einer L-förmig damit verbundenen Umfangswand ausgebildet ist. Das Flanschteil liegt an dem Primärteil 11 an und ist beispielsweise über eine Schweißnaht drehfest mit diesem verbunden.

Die erste Kupplung 5 hat eine Anzahl erster Lamellen 14 die mit der Kurbelwelle der Hubkolbenverbrennungsmaschine 2 in Antriebsverbindung stehen und sich in parallel zueinander verlaufenden, radial zur Eingangswelle 6 angeordneten Ebenen erstrecken. In Axialrichtung sind die ersten Lamellen 14 durch Zwischenräume voneinander beabstandet. In die Zwischenräume greifen zweite Lamellen 15 ein, die mit der Umfangswand des Ausgangsteils 10 drehfest verbunden sind. Die erste Lamellen 14 und die zweiten Lamellen 15 sind zum Übertragen eines Drehmoments reibschlüssig miteinander verbindbar.

Die zweite Kupplung 8 hat eine Anzahl erster Lamellen 16, die mit einem Rotor 17 der ersten elektrischen Maschine 3 in Antriebsverbindung stehen und sich in parallel zueinander verlaufenden, radial zur Eingangswelle 6 angeordneten Ebenen erstrecken. In Axialrichtung sind die ersten Lamellen 16 durch Zwischenräume voneinander beabstandet. In die Zwischenräume greifen zweite Lamellen 18 ein, die mit einer Außenumfangswand des Primärteils 11 drehfest verbunden sind. Die erste Lamellen 16 und die zweiten Lamellen 18 sind zum Übertragen eines Drehmoments reibschlüssig miteinander verbindbar. Bei dem in Fig. 2 und 3 gezeigten Ausführungsbeispiel sind also die zweiten Lamellen 15, 18 der beiden Kupplungen 5, 8 jeweils mit dem Primärteil 11 des ersten Drehschwingungsdämpfers 9 drehfest verbunden.

Auch bei dem in Fig. 4, 5 und 6 gezeigten Ausführungsbeispiel sind die zweiten Lamellen 15 der ersten Kupplung 5 mit dem Primärteil 11 des ersten Drehschwingungsdämpfers 9 drehfest verbunden. Die zweiten Lamellen 18 der zweiten Kupplung 8 sind jedoch an dem Sekundärteil 12 des ersten Drehschwingungsdämpfers 9 angeordnet.

Bei dem Ausführungsbeispiel gemäß Fig. 4 weist das Sekundärteil 12 dazu einen in Umfangsrichtung umlaufenden kragenförmigen Rand auf, an dessen Außenseite die zweiten Lamellen 18 drehfest mit diesem verbunden sind. Dabei sind die zweiten Lamellen 18 radial außerhalb des Drehschwingungsdämpfers 9 angeordneten.

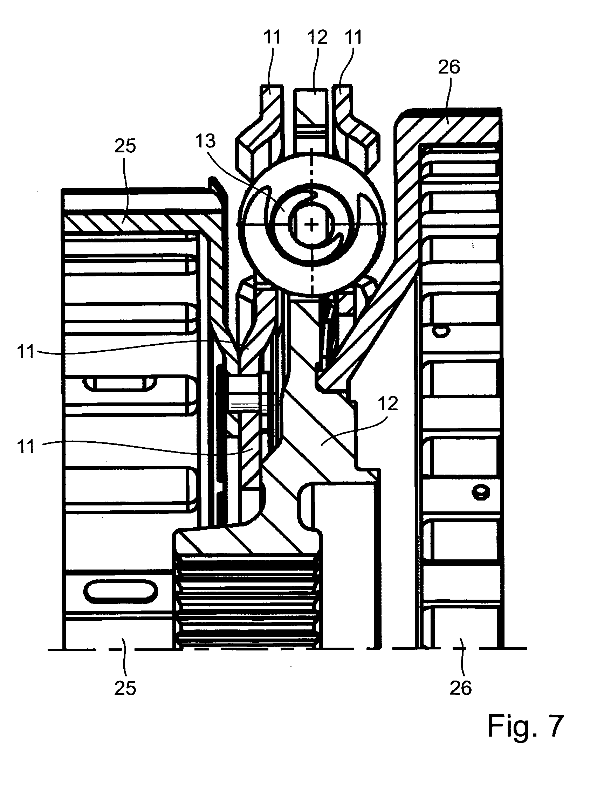

Bei dem in Fig. 7 gezeigten Ausführungsbeispiel sind die zweiten Lamellen 15 der ersten Kupplung 5 an der Innenumfangswand eines ersten Lamellenträgers 25 und die zweiten Lamellen 18 der zweiten Kupplung 8 an der Innenumfangswand eines zweiten Lamellenträgers 26 angeordnet. Der erste Lamellenträger 25 ist drehfest mit dem Primärteil 11 und der zweite Lamellenträger 26 drehfest mit dem Sekundärteil 12 verbunden. Dabei bilden die Lamellenträger 25, 26 jeweils einen die ihnen zugeordneten Lamellen 15, 18 umgrenzenden Käfig. Der zweite Lamellenträger 26 ist vorzugsweise mit dem Sekundärteil 12 verschweißt.

Der erste Lamellenträger 25 hat an seiner Innenumfangswand erste Aufnahmen, in welche die zweiten Lamellen 15 der ersten Kupplung 5 etwa radial zur Rotationsachse der Eingangswelle 6 eingreifen. In entsprechender Weise hat der zweite Lamellenträger 26 an seiner Innenumfangswand zweite Aufnahmen, in welche die zweiten Lamellen 18 der zweiten Kupplung 8 etwa radial zur Rotationsachse der Eingangswelle 6 eingreifen.

Die zweiten Lamellen 15 der ersten Kupplung 5 und die zweiten Lamellen 18 der zweiten Kupplung 8 sind in Axialrichtung der Eingangswelle 6 nebeneinander angeordnet und durch einen Zwischenraum voneinander beabstandet. In dem Zwischenraum ist der Drehschwingungsdämpfer 9 angeordnet.

In Fig. 2, 4 und 6 ist erkennbar, dass die erste elektrische Maschine 3 und die zweite elektrische Maschine 4 jeweils koaxial zur Eingangswelle 6 des Getriebes 7 angeordnet sind. Die erste elektrische Maschine 3 ist durch einen ringförmig um die Eingangswelle 6 umlaufenden Zwischenraum von dieser beabstandet. In dem Zwischenraum der ist der erste Drehschwingungsdämpfer 9 angeordnet.

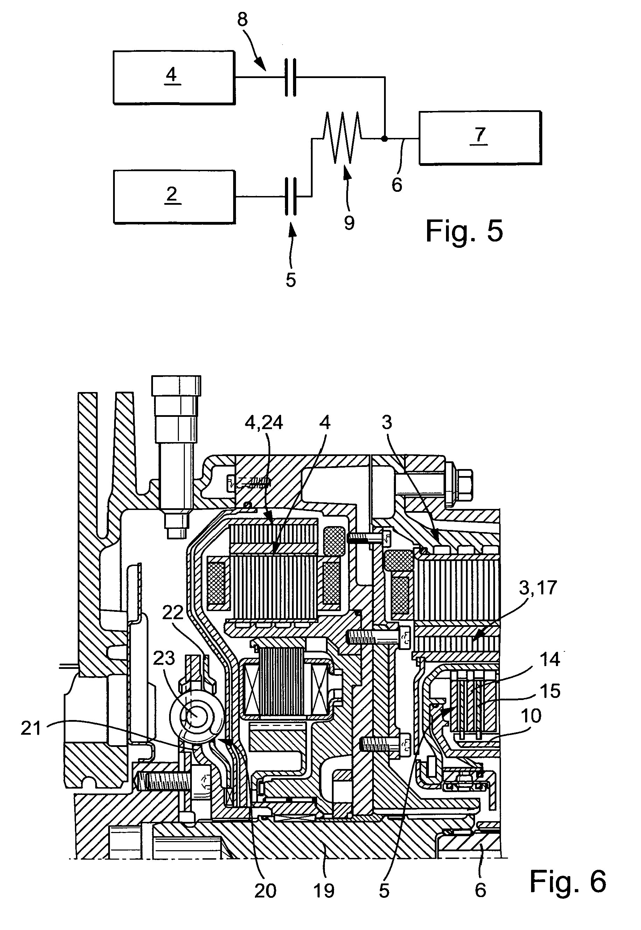

In Fig. 6 ist erkennbar, dass die zweite elektrische Maschine 4 in einem axial zwischen der Hubkolbenverbrennungsmaschine 2 und dem ersten Drehschwingungsdämpfer 9 befindlichen Bauraum koaxial zu einer Zwischenwelle 19 angeordnet ist. Die Zwischenwelle 19 befindet sich in gerader Verlängerung der Eingangswelle 6 und ist gegenüber dieser drehbar gelagert. Sie verbindet den Läufer 24 der zweiten elektrischen Maschine 4 drehfest mit dem Primärteil 11 des ersten Drehschwingungsdämpfers 9.

Zwischen der zweiten elektrischen Maschine 4 und der Hubkolbenverbrennungsmaschine 2 ist ein zweiter Drehschwingungsdämpfer 20 angeordnet ist, der ein mit der Kurbelwelle der Hubkolbenverbrennungsmaschine 2 verbundenes Eingangsteil 21 und ein mit dem Läufer 24 der zweiten elektrischen Maschine 4 drehfest verbundenes Ausgangsteil 22 aufweist. Das Eingangsteil 21 und das Ausgangsteil 22 sind aus einer Ruhelage gegen die Rückstellkraft mindestens eines Federelements 23 relativ zueinander verdrehbar. Der zweite Drehschwingungsdämpfer 20 ist teilweise innerhalb des von der zweiten elektrischen Maschine 4 umgrenzten Bauraums angeordnet.

### Bezugszeichenliste

- 1: Antriebsstrang
- 2: Hubkolbenverbrennungsmaschine
- 3: erste elektrische Maschine
- 4: zweite elektrische Maschine
- 5: erste Kupplung
- 6: Eingangswelle
- 7: Getriebe
- 8: zweite Kupplung
- 9: erster Drehschwingungsdämpfer
- 10: Ausgangsteil
- 11: Primärteil
- 12: Sekundärteil
- 13: Feder
- 14: erste Lamellen
- 15: zweite Lamellen
- 16: erste Lamellen
- 17: Rotor
- 18: zweite Lamellen
- 19: Zwischenwelle
- 20: zweiter Drehschwingungsdämpfer
- 21: Eingangsteil
- 22: Ausgangsteil
- 23: Federelement
- 24: Läufer
- 25: erster Lamellenträger
- 26: zweiter Lamellenträger

## Patentansprüche

1. Antriebsstrang (1) für ein Kraftfahrzeug, der als Antrieb eine Hubkolbenverbrennungsmaschine (2) und mindestens eine elektrische Maschine (3) aufweist, wobei die Hubkolbenverbrennungsmaschine (2) über eine erste Kupplung (5) und die elektrische Maschine (3) über eine zweite Kupplung (8) mit einer Eingangswelle (6) eines Getriebes (7) in Antriebsverbindung bringbar sind, **dadurch gekennzeichnet, dass** zwischen der ersten Kupplung (5) und der Eingangswelle (6) des Getriebes (7) ein Drehschwingungsdämpfer (9) angeordnet ist.

2. Antriebsstrang (1) nach Anspruch 1, **dadurch gekennzeichnet, dass** der Drehschwingungsdämpfer (9) ein mit der ersten Kupplung (5) verbundenes Primärteil (11) und ein mit der Eingangswelle (6) verbundenes Sekundärteil (12) aufweist, und dass das Primärteil (11) und das Sekundärteil (12) aus einer Ruhelage gegen die Rückstellkraft mindestens einer Feder (13) relativ zueinander verdrehbar sind.

3. Antriebsstrang (1) nach Anspruch 1 oder 2, **dadurch gekennzeichnet, dass** die erste Kupplung (5) die Hubkolbenverbrennungsmaschine (2) mit dem Primärteil (11) und die zweite Kupplung (8) die elektrische Maschine (3) mit dem Sekundärteil (12) des Drehschwingungsdämpfers (9) verbindet.

4. Antriebsstrang (1) nach einem der Ansprüche 1 bis 3, **dadurch gekennzeichnet, dass** die erste Kupplung (5) die Hubkolbenverbrennungsmaschine (2) und die zweite Kupplung (8) die elektrische Maschine (3) jeweils mit dem Primärteil (12) des Drehschwingungsdämpfers (9) verbindet.

5. Antriebsstrang (1) nach einem der Ansprüche 1 bis 4, **dadurch gekennzeichnet, dass** die elektrische Maschine (3) koaxial zur Eingangswelle (6) des Getriebes (7) angeordnet und durch einen ringförmig um die Eingangswelle (6) umlaufenden Zwischenraum von dieser beabstandet ist, und dass in dem Zwischenraum der Drehschwingungsdämpfer (9) vorgesehen ist.

6. Antriebsstrang (1) nach einem der Ansprüche 1 bis 5, **dadurch gekennzeichnet, dass** die zweite Kupplung (8) mit einem Rotor (17) der elektrischen Maschine (3) verbundene erste Lamellen (14) und relativ dazu verdrehbare zweite Lamellen (15) aufweist, und dass die zweiten Lamellen (15) direkt mit dem Primärteil (11) verbunden sind.

7. Antriebsstrang (1) nach einem der Ansprüche 1 bis 6, **dadurch gekennzeichnet, dass** das Primärteil (11) eine Außenumfangswand aufweist und dass die zweiten Lamellen (15) direkt mit der Außenumfangswand verbunden und vorzugsweise in normal zur Eingangswelle (6) des Getriebes (7) verlaufenden Ebenen angeordnet sind.

8. Antriebsstrang (1) nach einem der Ansprüche 1 bis 7, **dadurch gekennzeichnet, dass** die erste Kupplung (5) erste Lamellen (14) und relativ dazu verdrehbare zweite Lamellen (15) aufweist, und dass diese ersten Lamellen (14) und zweiten Lamellen (15) in Axialrichtung der Eingangswelle (6) neben dem Drehschwingungsdämpfer (9) angeordnet sind.

9. Antriebsstrang (1) nach einem der Ansprüche 1 bis 8, **dadurch gekennzeichnet, dass** die ersten Lamellen (16) und die zweiten Lamellen (18) der zweiten Kupplung (8) in Axialrichtung der Eingangswelle (6) neben dem Drehschwingungsdämpfer (9) angeordnet sind.

10. Antriebsstrang (1) nach einem der Ansprüche 1 bis 9, **dadurch gekennzeichnet, dass** der Drehschwingungsdämpfer (9) zwischen den Lamellen (14, 15) der ersten Kupplung (5) und den Lamellen (16,18) der zweiten Kupplung (8) angeordnet ist.

11. Antriebsstrang (1) nach einem der Ansprüche 1 bis 10, **dadurch gekennzeichnet, dass** er zusätzlich zu der ersten elektrischen Maschine (3) eine dem Drehschwingungsdämpfer (9) vorgeschaltete zweite elektrische Maschine (4) aufweist, die mit der Hubkolbenverbrennungsmaschine (2) in Antriebsverbindung steht.

12. Antriebsstrang (1) nach einem der Ansprüche 1 bis 11, **dadurch gekennzeichnet, dass** die zweite elektrische Maschine (4) in einem axial zwischen der Hubkolbenverbrennungsmaschine (2) und dem Drehschwingungsdämpfer (9) befindlichen Bauraum koaxial zu einer in gerader Verlängerung der Eingangswelle vorgesehenen Zwischenwelle (19) angeordnet.

13. Antriebsstrang (1) nach einem der Ansprüche 1 bis 12, **dadurch gekennzeichnet, dass** zwischen der zweiten elektrischen Maschine (4) und der Hubkolbenverbrennungsmaschine (2) ein zweiter Drehschwingungsdämpfer (20) angeordnet ist, der vorzugsweise ein mit einer Kurbelwelle der Hubkolbenverbrennungsmaschine (2) verbundenes Eingangsteil (21) und ein mit dem Läufer der zweiten elektrischen Maschine (2) drehfest verbundenes Ausgangsteil (22) aufweist, und dass das Eingangsteil (21) und das Ausgangsteil (22) aus einer Ruhelage gegen die Rückstellkraft mindestens eines Federelements (23) relativ zueinander verdrehbar sind.

14. Antriebsstrang (1) nach einem der Ansprüche 1 bis 13, **dadurch gekennzeichnet, dass** die Feder (13) und/oder das Federelement (23) eine gebogene Wendelfeder ist, die in einer Gleitrinne liegt.

15. Antriebsstrang (1) nach einem der Ansprüche 1 bis 14, **dadurch gekennzeichnet, dass** die Feder (13) und/oder das Federelement (23) eine Bogenfeder ist.

16. Antriebsstrang (1) nach einem der Ansprüche 1 bis 15, **dadurch gekennzeichnet, dass** die Kupplungen (5, 8) Nasskupplungen sind.
